# EUROPEAN PATENT APPLICATION

(11) **EP 3 379 478 A1**
(43) Date of publication of application: **26.09.2018**
(21) Application number: 16866337.5
(22) Date of filing: 16.11.2016
(51) Int. Cl.: G06Q 20/30, G06K 7/10, G06K 19/06

(54) **REGISTER DEVICE, PROGRAM, SETTLEMENT ASSISTANCE SYSTEM, AND SETTLEMENT ASSISTANCE METHOD**

(30) Priority: 19.11.2015 JP 2015226913; 13.04.2016 JP 2016080581
(71) Applicant: Recruit Holdings Co., Ltd., Tokyo 104-0061 (JP)
(72) Inventor: MAEZAWA, Ryuichiro, Tokyo 100-6640 (JP); OKUBO, Kazunori, Tokyo 100-6640 (JP); ISHIKAWA, Shuhei, Tokyo 100-6640 (JP); TODA, Yohei, Tokyo 100-6640 (JP)
(74) Representative: EIP
(86) International application number: PCT/JP2016/083930
(87) International publication number: WO 2017/086336

(57) **Abstract**

With a payment system allowing use of a plurality of payment services, reduced cost and increased convenience may be achieved for a store, and increased task efficiency and increased convenience may be achieved for a user. A register device includes an image capturing device (4) for capturing a two-dimensional code, a code reading unit (347) for reading payment code information from the two-dimensional code captured by the image capturing device (4), an image recognition processing unit (348) for performing a recognition process of an image allowing identification of a payment method, from an image including the two-dimensional code captured by the image capturing device (4), a payment method specification unit (349) for specifying a payment method based on the image recognized by the image recognition processing unit (348), a transmission unit (303) for transmitting, to a predetermined server, payment request information including the payment code information read by the code reading unit (347), information about the payment method specified by the payment method specification unit (349), and information about a payment amount, and an information output unit (345) for receiving, and outputting, a result of a payment process that is based on the payment request information.

## Description

### CROSS-REFERENCES TO RELATED APPLICATIONS

The present application is based on Japanese Patent Application No. 2015-226913 filed on November 19, 2015 and Japanese Patent Application No. 2016-080581 filed on April 13, 2016, the disclosures of which are incorporated herein by reference.

### Technical Field

The present invention relates to a register device, a program, a payment support system, and a payment support method.

### Background Art

Conventionally, online payment services for performing payment using mobile phones and the like are known.

Figure 1 of Patent Literature 1 shows a payment system including a mobile information terminal 1, a payment server 24, a barcode reader 31, a POS register 32, and a payment controller 33. With this payment system, the mobile information terminal 1 displays a barcode pattern on a display. The POS register 32 reads the barcode pattern by a barcode reader 31, and supplies acquired barcode information to the payment controller 33. The payment controller 33 acquires payment information by connecting to a payment server 24 through a dedicated line 5. The POS register 32 calculates a billing amount based on the payment information acquired via the payment controller 33. When an amount received from a user is input, the POS register 32 issues a receipt on which the payment information is printed.

### Citation List

### Patent Literature

Patent Literature 1: Japanese Patent Laid-Open No. 2001-5883

### Summary of Invention

In the payment system, a plurality of payment services can be used. However, to use a plurality of payment services, a member store 3 having the POS register 32, the payment controller 33 and the like has to introduce a payment processing system corresponding to each payment service, and there are problems that the initial cost is very high and that the convenience is low. Furthermore, a user using a mobile terminal has to install corresponding payment application software in the mobile terminal for each payment service, and there are problems that the efficiency is extremely low and that the convenience is low.

Accordingly, some modes of the present disclosure are attained in view of the circumstances described above, and an object is to provide a register device, a program, a payment support system, and a payment support method which are capable of realizing, with respect to a payment system allowing use of a plurality of payment services, reduced cost and increased convenience for a store, and increased task efficiency and increased convenience for a user.

A register device according to an aspect of the present disclosure includes an image capturing device for capturing a two-dimensional code; a code reading unit for reading payment code information from the two-dimensional code captured by the image capturing device; an image recognition processing unit for performing a recognition process of an image allowing identification of a payment method, from an image including the two-dimensional code captured by the image capturing device; a payment method specification unit for specifying a payment method based on the image recognized by the image recognition processing unit; a transmission unit for transmitting, to a predetermined server, payment request information including the payment code information read by the code reading unit, information about the payment method specified by the payment method specification unit, and information about a payment amount; and an information output unit for receiving, and outputting, a result of a payment process that is based on the payment request information.

Furthermore, a program according to an aspect of the present disclosure causes a computer to execute capturing a two-dimensional code by an image capturing device; reading payment code information from the two-dimensional code captured by the image capturing device; performing a recognition process of an image allowing identification of a payment method, from an image including the two-dimensional code captured by the image capturing device; specifying a payment method based on the image recognized in the recognition process; transmitting, to a predetermined server, payment request information including the payment code information that is read, information about the payment method that is specified, and information about a payment amount; and receiving, and outputting, a result of a payment process that is based on the payment request information.

Furthermore, a payment support system according to an aspect of the present disclosure includes a register device, and a payment support server. The register device includes an image capturing device for capturing a two-dimensional code, a code reading unit for reading payment code information from the two-dimensional code captured by the image capturing device, an image recognition processing unit for performing a recognition process of an image allowing identification of a payment method, from an image including the two-dimensional code captured by the image capturing device, a payment method specification unit for specifying a payment method based on the image recognized by the image recognition processing unit, a first transmission unit for transmitting, to the payment support server, payment request information including the payment code information read by the code reading unit, information about the payment method specified by the payment method specification unit, and information about a payment amount, and an information output unit for receiving from the payment support server, and outputting, a result of a payment process that is based on the payment request information. Moreover, the payment support server includes a reception unit for receiving the payment request information from the register device, a second transmission unit for transmitting, to a payment server specified based on the information about the payment method included in the payment request information, information including the payment code information and the payment amount information included in the payment request information, and a third transmission unit for transmitting, to the register terminal device, the result of the payment process received from the payment server.

Furthermore, a payment support method according to an aspect of the present disclosure is a method for supporting a payment process that is based on a two-dimensional code, and includes capturing a two-dimensional code by a register device using an image capturing device; reading, by the register device, payment code information from the two-dimensional code captured by the image capturing device; performing, by the register device, a recognition process of an image allowing identification of a payment method, from an image including the two-dimensional code captured by the image capturing device; specifying, by the register device, a payment method based on the image recognized in the recognition process; transmitting, by the register device, to a payment support server, payment request information including the payment code information that is read, information about the payment method that is specified, and information about a payment amount; receiving, by the payment support server, the payment request information from the register device; transmitting, by the payment support server, to a payment server specified based on the information about the payment method included in the payment request information, information including the payment code information and the payment amount information included in the payment request information; transmitting, by the payment support server, to the register terminal device, a result of the payment process received from the payment server; and receiving, by the register device, from the payment support server, the result of the payment process that is based on the payment request information, and outputting the result by the register device.

Additionally, in the present disclosure, "unit", "device", and "system" do not simply mean physical means, and may also include a case where functions of the "unit", the "device", and the "system" are implemented by software. Furthermore, a function of one "unit", "device" or "system" may be implemented by two or more physical means or devices, or functions of two or more "units", "devices", or "systems" may be implemented by one physical means or device.

### Advantageous Effects of Invention

According to the present disclosure, one payment server may be accurately specified among a plurality of payment servers, and identification information, payment amount information, and a result of a payment process may be appropriately transmitted/received. Accordingly, with a payment system allowing use of a plurality of payment services, reduced cost and increased convenience may be achieved for a store, and increased task efficiency and increased convenience may be achieved for a user.

### Brief Description of Drawings

[Figure 1] Figure 1 is a schematic configuration diagram (system configuration diagram) showing an embodiment of a payment support system according to an embodiment of the present disclosure.
[Figure 2] Figure 2 is a block diagram showing an embodiment of a POS register according to the embodiment of the present disclosure.
[Figure 3] Figure 3 is a block diagram showing an embodiment of a payment support server according to the embodiment of the present disclosure.
[Figure 4] Figure 4 is a flowchart showing an example flow of an operation of a payment process and a transmission/reception operation for a result of the payment process, according to the embodiment of the present disclosure.
[Figure 5] Figure 5 is a flowchart showing another example flow of the operation of the payment process and the transmission/reception operation for the result of the payment process, according to the embodiment of the present disclosure.
[Figure 6] Figure 6 is a block diagram showing another embodiment of the POS register according to the embodiment of the present disclosure.
[Figure 7] Figure 7 is a flowchart showing another example flow of the operation of the payment process and the transmission/reception operation for the result of the payment process, according to the embodiment of the present disclosure.
[Figure 8] Figure 8 is a flowchart showing another example flow of the operation of the payment process and the transmission/reception operation for the result of the payment process, according to the embodiment of the present disclosure.
[Figure 9] Figure 9 is a diagram showing an example screen that is displayed on a display unit of a mobile terminal according to the embodiment of the present disclosure.
[Figure 10] Figure 10 is a diagram showing an example screen that is displayed on the display unit of the mobile terminal according to the embodiment of the present disclosure.

Hereinafter, embodiments of the present disclosure will be described with reference to the appended drawings. The following embodiments are examples for describing the present disclosure, and are not intended to limit the present disclosure to the embodiments. Furthermore, various modifications can be made without departing from the scope of the present disclosure. Moreover, in the drawings, same structural elements are denoted by same reference signs where possible, and a redundant description is omitted.

### (First Embodiment)

### (Overall Configuration of Payment Support System)

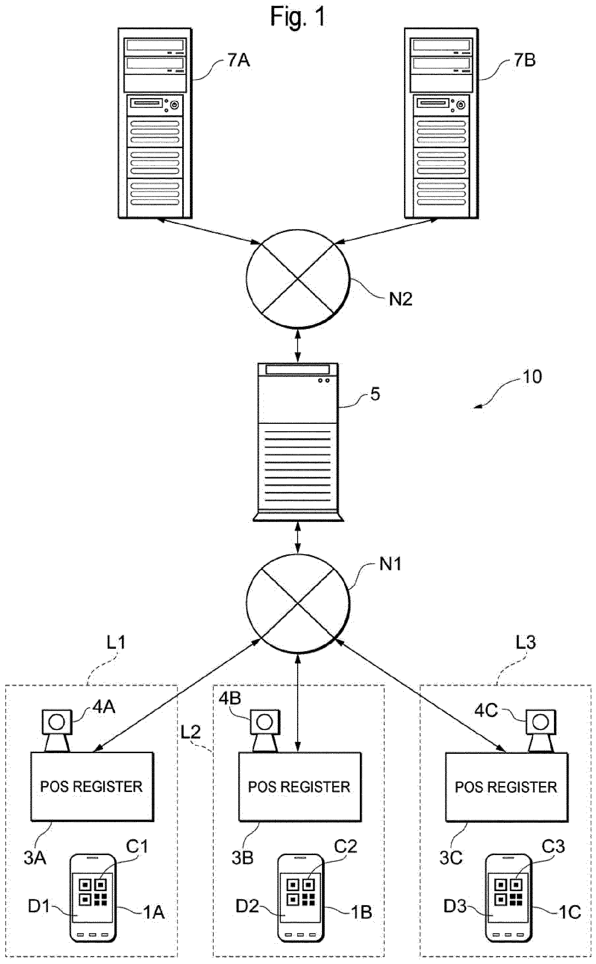

Figure 1 is a schematic configuration diagram (system configuration diagram) showing an embodiment of a payment support system according to an embodiment of the present disclosure. The payment support system of the present embodiment is a system for supporting a payment process that is based on two-dimensional code information. As shown in Figure 1, a payment support system 10 according to the embodiment of the present disclosure includes mobile terminals 1A, 1B, 1C, POS (Point of Sales) registers 3A, 3B, 3C (registers) including image capturing devices 4A, 4B, 4C, a payment support server 5, and payment servers 7A, 7B, for example.

Additionally, the payment support server 5 and the payment server 7 each include a computer device for a server, connected to a predetermined network, and a server function is implemented when a predetermined program for a server is executed at the computer device for a server. The payment support server 5 and the payment server 7 may be realized by cloud computing or the like, without being particularly limited, as long as the server function is achieved.

In the case of giving a description by distinguishing between the mobile terminals 1, terms "mobile terminal 1A", "mobile terminal 1B", and "mobile terminal 1C" are used. In the case of giving a description by distinguishing between the POS registers 3, terms "POS register 3A", "POS register 3B", and "POS register 3C" are used. In the case of giving a description by distinguishing between the image capturing devices 4, terms "image capturing device 4A", "image capturing device 4B", and "image capturing device 4C" are used. In the case of giving a description by distinguishing between the payment servers 7, terms "payment server 7A", and "payment server 7B" are used.

As shown in Figure 1, the payment support server 5 is capable of communicating with each POS register 3A, 3B, 3C at each store L1, L2, L3 via a communication network N1. Furthermore, the payment support server 5 is capable of communicating with each payment server 7A, 7B via a communication network N2.

As described, the payment support server 5 is located, in the payment support system 10, between the POS register 3 and the payment server 7, and functions as relay means for transmission/reception of information and transmission/reception for a result of a payment process which are performed between the POS register 3 and the payment server 7. Specifically, as described later, the payment support server 5 accurately specifies one payment server among the plurality of payment servers 7, and operates to enable appropriate execution of transmission/reception of various pieces of information, such as various pieces of identification information, payment amount information and a result of a payment process, and transmission/reception of a result of a payment process, where transmission/reception is performed between the POS register 3 and the payment server 7.

Additionally, the communication network N1, N2 is a communication line or a communication network for information processing, including the Internet, and a specific configuration thereof is not limited. For example, the communication network N1, N2 is a local area network (LAN) or a wide area network (WAN), and is constructed by one or both of a wired network and a wireless network.

### (Configuration of Mobile Terminal)

The mobile terminal 1 is configured of a device which at least includes functions of generating a respective code C1, C2, C3 including user identification information for identifying a user, and of displaying the generated code C1, C2, C3 on a respective display unit D1, D2, D3. Additionally, the mobile terminals 1 include mobile phones, such as smartphones, tablet terminals, laptop or notebook computers, and the like connected to predetermined networks. Furthermore, the display unit D is configured of a display such as a liquid crystal display panel, an organic EL panel, or the like. In the case of giving a description by distinguishing between the codes C, terms "code C1", "code C2", and "code C" are used, and in the case of giving a description by distinguishing between the display units D, terms "display unit D1", "display unit D2", and "display unit D3" are used.

The display unit D of the mobile terminal 1 has an input operation function of receiving various operation inputs performed by a user, and the like. For example, the display unit D is capable of displaying a login screen of payment processing application software, "My page" after login, images showing a plurality of payment services (payment methods) associated with the application software, and the like, and enables a user to perform various operation inputs, an enter operation, a cancel operation, and an instruction input to display a menu and the like.

For example, a user is a person who pays the purchase price for a product, a service or the like by using a payment method described later. For example, a user downloads payment processing application software according to the embodiment of the present disclosure from a predetermined site on a network, and saves the payment processing application software such that the payment processing application software can be executed by the mobile terminal 1.

The code C is not particularly limited as long as it is a code including user identification information. Additionally, the code C may be generated to include payment server identification information for identifying the payment server 7 that performs a payment process, payment amount information, and the like. For example, the code C may be a quick response (QR) code (registered trademark), which is a matrix two-dimensional code. However, the code C is not limited to the QR code, and may be a stacked code of a stacked type where one-dimensional codes are vertically superimposed. Additionally, the code C may include not only the user identification information, but also the payment server identification information, the payment amount information, coupon information for giving a discount from payment amount, and the like. For example, the coupon information is referred to at the time of calculation of the payment amount at the POS register 2 described later, and the payment amount may be discounted.

### (Configuration of POS Register)

The POS register 3 is a device for reading the code C, which includes at least the user identification information and which is displayed on the display unit D of the mobile terminal 1, by using the image capturing device 4 configured of a camera or the like. Furthermore, the POS register 3 is a device for transmitting the payment server identification information, the payment amount information, and the user identification information which is based on the code C which is read.

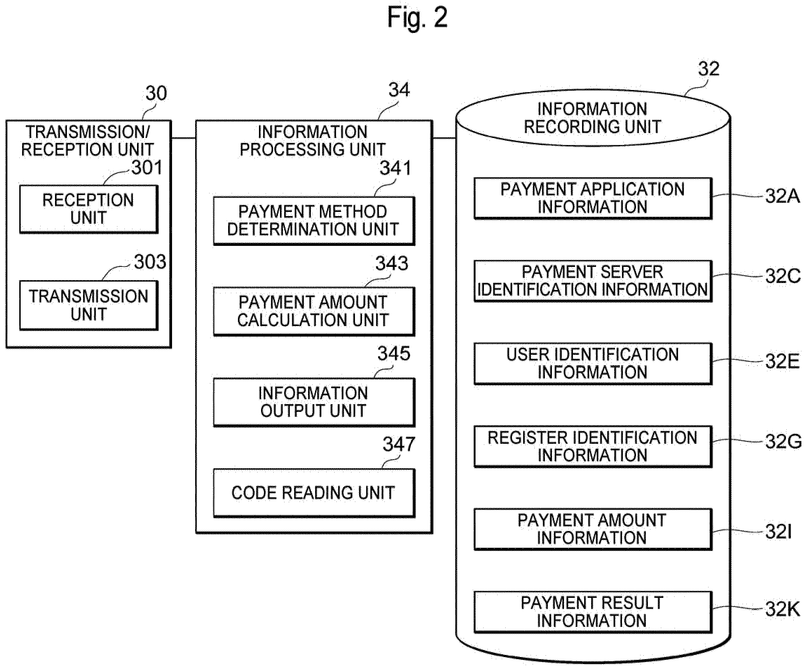

Figure 2 is a block diagram showing an embodiment of the POS register according to the embodiment of the present disclosure. As shown in Figure 2, the POS register 3 (register) includes a transmission/reception unit 30, an information recording unit 32, and an information processing unit 34, for example. A storage area, which is hardware such as a memory or a hard disk, may be divided and be used as the information recording unit 32, among the structures mentioned above of the POS register 3, for example. Furthermore, the information processing unit 34 may be functionally realized by execution by a processor, not shown, of a software program stored in the storage area.

The transmission/reception unit 30 is a block for performing transmission/reception of information between the payment support server 5 and the POS register 3 shown in Figure 1, and includes a reception unit 301 and a transmission unit 303, for example.

For example, the transmission unit 303 transmits to the payment support server 5 shown in Figure 1, via the communication network N1, the payment server identification information, the user identification information, register identification information indicating a transfer destination (POS register) of a result of a payment process, and the payment amount information. The register identification information is used in the following manner. For example, as described later, when the payment support server 5 shown in Figure 1 receives a result of a payment process from the payment server 7, the result is transferred to the POS register 3, but in a case where there is a plurality of POS registers 3, the POS register 3 which is to receive the result transmits in advance identification information of the POS register 3 itself to the payment support server 5 to clarify to which POS register 3 the payment support server 5 is to transfer the result.

For example, the reception unit 301 receives a result of a payment process at the payment server 7 shown in Figure 1 which is transmitted from the payment support server 5 shown in Figure 1 via the communication network N1.

The information recording unit 32 is a block for recording various pieces of information which are used in a payment process, and for example, records payment application information 32A, payment server identification information 32C, user identification information 32E, register identification information 32G, payment amount information 321, and payment result information 32K over a short or long period of time.

The payment application information 32A is information indicating payment processing application software. The payment server identification information 32C is information for identifying the payment server which performs the payment process. The user identification information 32E is information for identifying a user who uses a payment service. The user identification information 32E includes, but not exclusively, the name of a user, a user ID associated with a payment service, a credit card information (such as a card number) associated with a payment service, a password, age, date of birth, sex, height, and weight, and may further include attributes of the user, such as a family structure and personal relationships with friends and acquaintances. The payment amount information 321 is information indicating the amount of money corresponding to the price of a product, a service or the like a user desires to purchase, and is information indicating a payment amount. The payment result information 32K is information indicating a result of a payment process at the payment server 7 shown in Figure 1.

The information recording unit 32 records at least some of the payment application information 32A, the payment server identification information 32C, the user identification information 32E, the register identification information 32G, the payment amount information 321, and the payment result information 32K in association with each other. For example, the information recording unit 32 records, in association with the user identification information 32E, at least another piece of information among the payment server identification information 32C, the register identification information 32G, the payment amount information 321, and the payment result information 32K. For example, the information recording unit 32 records the user identification information 32E and the register identification information 32G in association with each other.

The information processing unit 34 is a block for processing various pieces of information which are used in a payment process, and for example, includes a payment method determination unit 341, a payment amount calculation unit 343, an information output unit 345, and a code reading unit 347.

The payment method determination unit 341 is a block for determining at least one of one payment method among a plurality of payment methods and a payment server corresponding to the one payment method. For example, the payment method determination unit 341 determines, based on the payment server identification information transmitted from the mobile terminal 1, at least one of one payment method among a plurality of payment methods and a payment server corresponding to the one payment method. Furthermore, for example, in the case where a store clerk or a user selects one payment method from a plurality of payment methods displayed in a list by the information output unit 345, described later, provided at the POS register 3, the payment method determination unit 341 may determine, based on a selection result, at least one of one payment method among a plurality of payment methods and a payment server corresponding to the one payment method.

The payment amount calculation unit 343 calculates the amount of money corresponding to the price of a product, a service or the like a user desires to purchase. For example, the payment amount calculation unit 343 generates the payment amount information indicating the amount of money.

The information output unit 345 outputs a result of a payment process at the payment server 7 shown in Figure 1, received by the reception unit 301. For example, the information output unit 345 corresponds to a display device, and displays a result of a payment process on the display device. Furthermore, for example, the information output unit 345 may correspond to an audio output device, and may be configured to output a result of a payment process by audio.

The code reading unit 347 is compatible with the image capturing device 4 configured of a camera or the like, and reads the code C which includes at least the user identification information and which is displayed on the display unit D of the mobile terminal 1. The code reading unit 347 may alternatively be a code reader, for example. Specifically, the code reading unit 347 irradiates a code pattern with light from a light emitting diode (LED; not shown) provided in the code reading unit 347, and receives reflected light by a charge coupled device (CCD) image sensor (not shown) provided in the code reading unit 347, and thereby acquires code pattern information. Then, the code reading unit 347 acquires at least the user identification information based on the code pattern information.

Additionally, in Figure 1, the image capturing device 4A, 4B, 4C is provided integrated with the POS register 3A, 3B, 3C, but the image capturing device 4A, 4B, 4C and the POS register 3A, 3B, 3C may be configured as separate units as long as captured information obtained by capturing by the image capturing device 4A, 4B, 4C can be supplied to the POS register 3A, 3B, 3C.

### (Configuration of Payment Support Server)

The payment support server is a server device for supporting a payment process which is based on two-dimensional code information. For example, the payment support server accurately specifies one payment server among a plurality of payment servers, and appropriately transmits/receives various pieces of identification information, the payment amount information, and a result of a payment process.

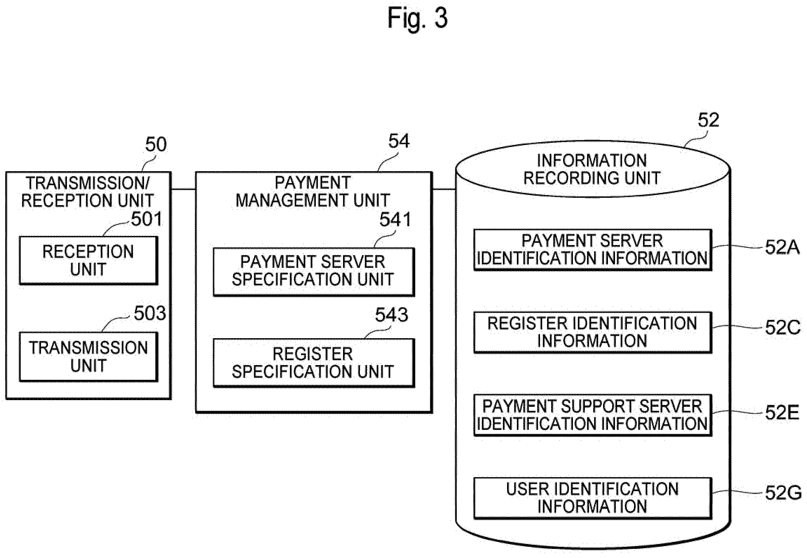

Figure 3 is a block diagram showing an embodiment of the payment support server according to the embodiment of the present disclosure. As shown in Figure 3, the payment support server 5 includes a transmission/reception unit 50, an information recording unit 52, and a payment management unit 54, for example. A storage area, which is hardware such as a memory or a hard disk, may be divided and be used as the information recording unit 52, among the structures mentioned above of the payment support server 5, for example. Furthermore, the payment management unit 54 may be functionally realized by execution by a processor, not shown, of a software program stored in the storage area.

The transmission/reception unit 50 is a block for performing transmission/reception of information between the payment server 7 and the payment support server 5 shown in Figure 1, and includes a reception unit 501 and a transmission unit 503, for example.

For example, the reception unit 501 (first reception unit) receives the payment server identification information, the user identification information, the register identification information indicating a transfer destination of a result of a payment process, and the payment amount information which are transmitted by the POS register 3 shown in Figure 1 via the communication network N1. Furthermore, for example, the reception unit 501 (first reception unit) receives a result of a payment process and the user identification information which are transmitted from the payment server 7 shown in Figure 1 via the communication network N2.

For example, the transmission unit 503 (first transmission unit) transfers, via the communication network N2, the user identification information and the payment amount information to one payment server specified by a payment server specification unit 541 described later. Furthermore, for example, the transmission unit 503 (first transmission unit) transfers, via the communication network N1, a result of a payment process to the POS register 3 (transfer destination) indicated by the register identification information which is recorded in association with the user identification information by the information recording unit 52 described later.

The information recording unit 52 is a block for recording various pieces of information which are used in a payment process, and for example, records payment server identification information 52A, register identification information 52B, payment support server identification information 52E, and user identification information 52G over a short or long period of time. For example, the information recording unit 52 records the payment server identification information 32C as the payment server identification information 52A, records the user identification information 32E as the user identification information 52G, and records the register identification information 32G as the register identification information 52B. Furthermore, for example, the information recording unit 52 records, in association with the user identification information 52G, at least another piece of information among the payment server identification information 52A, the register identification information 52B, and the payment support server identification information. For example, the information recording unit 52 records the user identification information 52G and the register identification information 52B in association with each other.

The payment management unit 54 is a block for managing the payment server 7 and the POS register 3 shown in Figure 1 in such a way that a payment process is appropriately executed. For example, the payment management unit 54 is a block for specifying the payment server 7 and for specifying the POS register 3, and includes a payment server specification unit 541 and a register specification unit 543. Furthermore, for example, the payment management unit 54 may be configured to add or remove at least one of the payment server and the POS register coordinating with the payment support server 5.

The payment server specification unit 541 specifies one payment server among a plurality of payment servers based on the payment server identification information. Because the payment server specification unit 541 appropriately specifies one payment server among a plurality of coordinating payment servers based on the payment server identification information, the transmission unit 503 (first transmission unit) can accurately transfer the user identification information and the payment amount information to the specified one payment server via the communication network N2.

The register specification unit 543 specifies one POS register among a plurality of POS registers based on the register identification information. Because the register specification unit 543 appropriately specifies one POS register among a plurality of coordinating POS registers based on the register identification information, the transmission unit 503 (first transmission unit) accurately transfers a result of a payment process to the POS register 3 (transfer destination) which is specified or associated in advance, via the communication network N1.

Additionally, for example, three mobile terminals 1, three POS registers 3, and three image capturing devices 4 are described as provided in the payment support system 10 shown in Figure 1, but the number of respective devices is not particularly limited. Furthermore, one payment support server 5 is described as provided in the payment support system 10 shown in Figure 1, but the number of the servers does not necessarily have to be one. For example, the payment support server 5 may include a plurality of servers (devices) to function as one payment support server. Moreover, two payment servers 7 are described as provided in the payment support system 10 shown in Figure 1, but the number of the servers is not particularly limited as long as it is two or more.

### (Configuration of Payment Server)

Referring back to Figure 1, the payment server 7 is a server device for executing a payment process. For example, the payment server 7 includes a reception unit (third reception unit), a payment processing unit, and a transmission unit (third transmission unit) which are not shown, where the reception unit receives the user identification information and the payment amount information which are transmitted from the transmission unit 503 (first transmission unit) of the payment support server 5 shown in Figure 3, the payment processing unit executes a payment process in a case where a payment amount is equal to or smaller than a payment limit associated with the user, and does not execute the payment process in a case where the payment amount is greater than the payment limit, based on the user identification information and the payment amount information received by the reception unit, and the transmission unit transmits, as a result of the payment process, information indicating that the payment process was executed or was not executed.

For example, personal information of a user (user identification information) is registered in advance by the user in the payment server 7 by a membership registration procedure for a payment service, for example, so that use of a payment service associated with the payment server is enabled. The payment server 7 acquires the personal information of a user through a Web screen of a terminal device, for example, and records the personal information. The payment server 7 checks which member's payment process a payment process is, by checking against each other the personal information of a user registered in advance by a user and the user identification information transmitted from the payment support server 5.

Additionally, as a result of checking against each other the personal information of a user and the user identification information transmitted from the payment support server 5, if a user who registered as a member of a payment service and a user who is currently trying to use the payment service do not match, the payment server 7 does not perform the payment process. The payment server 7 transmits, to the payment support server 5, information indicating that the payment process was not performed, as a result of the payment process.

For example, in the case where the payment limit associated with a user is 1,000 yen, if the payment amount indicated by the payment amount information is 700 yen, the payment server 7 performs the payment process, because the payment amount is equal to or smaller than the payment limit. Then, the payment server 7 transmits, to the payment support server 5, information indicating that the payment process was executed, as a result of the payment process.

On the other hand, for example, in the case where the payment limit associated with a user is 1,000 yen, if the payment amount indicated by the payment amount information is 1,200 yen, the payment server 7 does not execute the payment process, because the payment amount is greater than the payment limit. Then, the payment server 7 transmits, to the payment support server 5, information indicating that the payment process was not executed, as a result of the payment process.

The payment limit here may be the amount of money in a bank account associated with a user and a payment service, a limit of electronic money associated with a user and a payment service, a credit limit of a credit card, a debit card or the like associated with a user and a payment service, and the like. Additionally, the payment process in the present embodiment is, but is not limited to, instant payment, and deferred payment and advance payment are also allowed.

### (Operation of Payment Process and Transmission/Reception Operation for Result of Payment Process)

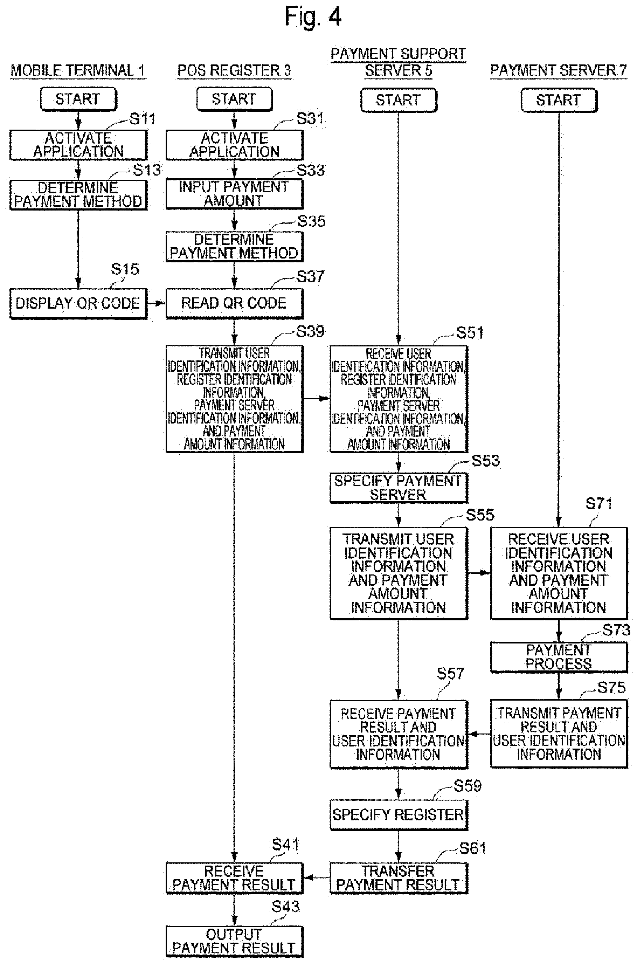

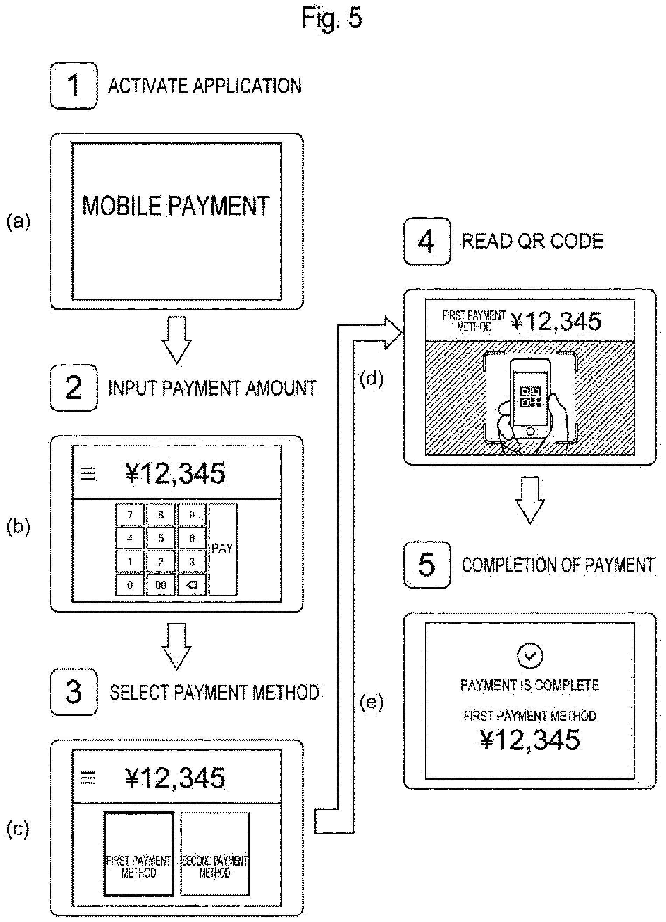

An operation of a payment process according to the embodiment of the present disclosure will be described with reference to Figures 4 and 5. Figures 4 and 5 are flowcharts showing an example flow of a payment process according to the embodiment of the present disclosure. It is assumed that the payment processing application software according to the embodiment of the present disclosure is downloaded in advance by a user from a predetermined site on a network, for example, and is saved so that the software can be executed by the mobile terminal 1. Furthermore, the payment processing application software according to the embodiment of the present disclosure is downloaded in advance by the POS register 3 from a predetermined site on a network, for example, and is saved so that the software can be executed by the POS register 3. Additionally, a payment processing application downloaded in the mobile terminal 1 and a payment processing application downloaded in the POS register 3 may be different applications or the same application.

As shown in Figure 4, first, the mobile terminal 1 activates downloaded payment processing application software (Figure 4, step S11) . In the case where a membership number or a password is input by a user to the activated application software, the mobile terminal 1 executes a login process.

The mobile terminal 1 displays a list of images indicating a plurality of payment services (payment methods) on the display unit D (see Figure 1). Then, in the case where one payment method among the plurality of payment methods is selected on the display device D by the user carrying the mobile terminal 1, the mobile terminal 1 determines, based on an input signal according to the selection by the user, that the payment method selected by the user is the payment method which is to be currently used (Figure 4, step S13).

The mobile terminal 1 displays a QR code (Figure 4, step S15).

The POS register 3 activates downloaded payment processing application software (Figure 4, step S31; Figure 5(a)). For example, in the case where a membership number or a password is input by a store clerk to the activated application software, the POS register 3 executes a login process. Normally, download of payment processing application software and a login process are completed when a payment system is introduced in a store, but download of payment processing application software and a login process may alternatively be performed at arbitrary timings.

A payment amount is input to the POS register 3 (Figure 4, step S33; Figure 5(b)). For example, the store clerk calculates and inputs, to the POS register 3, as the payment amount, the price of a product or a service purchased by the user. Alternatively, input of the payment amount may be performed by the user himself/herself.

The POS register 3 shown in Figure 2 displays a list of a plurality of payment methods (see Figure 5(c)). In the example in Figure 5, a first payment method and a second payment method are shown as online payment methods (services), but such a case is not restrictive. That is, there may be three or more payment methods. In the case where one payment method is selected at the POS register 3 (for example, the first payment method is selected in Figure 5(c)), the POS register 3 determines, based on an input signal according to the selection by the user or the store clerk, that the selected payment method is the payment method which is to be currently used (Figure 4, step S35).

Next, the POS register 3 reads the QR code (Figure 4, step S37; Figure 5(d)). The POS register 3 acquires at least the user identification information from the QR code.

The POS register 3 transmits, to the payment support server, the payment server identification information, the user identification information, the register identification information indicating the transfer destination of a result of the payment process, and the payment amount information (Figure 4, step S39).

The payment support server 5 receives the payment server identification information, the user identification information, the register identification information, and the payment amount information (Figure 4, step S51).

The payment support server 5 specifies, based on the payment server identification information, one payment server corresponding to the first payment method among payment servers corresponding, respectively, to the first payment method and the second payment method (Figure 4, step S53).

The payment support server 5 transfers the user identification information and the payment amount information to the specified one payment server corresponding to the first payment method (Figure 4, step S55). Here, for example, the payment support server may be configured to transmit identification information for identifying the payment support server itself (the payment support server identification information 52E shown in Figure 3). Specifically, in the case where the payment server is in coordination with a plurality of payment support servers, the payment support server transmits the payment support server identification information of the payment support server itself to the payment server so as to clarify to which payment support server the payment server is to transmit the result of the payment process. On the other hand, in the case where the payment support servers and the payment servers are in one-to-one correspondence, if one payment support server to which the result of the payment process is to be transmitted is determined in advance, the payment support server does not have to transmit the payment support server identification information.

Next, the payment server 7 corresponding to the first payment method receives the user identification information and the payment amount information (Figure 4, step S71). The payment server 7 may also receive the payment support server identification information.

The payment server 7 corresponding to the first payment method performs the payment process (Figure 4, step S73). For example, the payment server 7 is configured to execute the payment process in a case where the payment amount is equal to or smaller than a payment limit associated with the user, and to not execute the payment process in a case where the payment amount is greater than the payment limit, by referring to the registered personal information of the user based on the received user identification information and payment amount information.

The payment server 7 corresponding to the first payment method transmits the result of the payment process and the user identification information (Figure 4, step S75). For example, the payment server 7 is configured to transmit, as the result of the payment process, information indicating that the payment process was executed or was not executed.

Next, the payment support server 5 receives the result of the payment process and the user identification information transmitted from the payment server 7 corresponding to the first payment method (Figure 4, step S57) .

The payment support server 5 specifies the POS register 3 indicated by the register identification information which is recorded in association with the user identification information (Figure 4, step S59).

The payment support server 5 transfers the result of the payment process to the specified POS register 3 (transfer destination) (Figure 4, step S61).

Next, the POS register 3 receives the result of the payment process transmitted from the payment support server 5 (Figure 4, step S41).

The POS register 3 outputs the received result of the payment process (Figure 4, step S43; Figure 5(e)). In Figure 5(e), the POS register 3 displays, as the result of the payment process, information indicating that the payment process was executed, or in other words, that the payment process was completed without any problem. The POS register 3 may also output the result of the payment process in audio. For example, the POS register 3 may be configured to output audio such as "payment is completed" or "payment is not completed". In this manner, when a result of a payment process is output at the POS register 3, a user and a store clerk can easily grasp whether the payment process was executed or not.

According to the present disclosure, one payment server may be accurately specified from a plurality of payment servers, and identification information, payment amount information, and a result of a payment process may be appropriately transmitted/received. Accordingly, with respect to the payment system allowing use of a plurality of payment services, reduced cost and increased convenience may be achieved for a store, and increased task efficiency and increased convenience may be achieved for a user.

Additionally, the present embodiment is for facilitating understanding of the present disclosure, and is not intended to limit interpretation of the present disclosure. The present disclosure may be changed/modified without departing from the scope of the present disclosure, and may also include equivalents thereof. Furthermore, the present disclosure may be embodied with various modifications (by combining embodiments, for example) without departing from the scope of the present disclosure.

In the present embodiment, the user identification information is described to be information (local ID) allowing a user to be locally identified in each payment server. That is, the user identification information according to the present embodiment is a user ID allowing identification of a user only in the payment server corresponding to the first payment method, or a user ID allowing identification of a user only in the payment server corresponding to the second payment method, for example. In the case of using the local ID, a corresponding local ID is transmitted to a respective payment server specified by the payment server identification information, as described above. On the other hand, the user identification information may be a global ID which is associated with an entity operating the payment support service of the present embodiment, for example. Furthermore, the user identification information may be a global ID which is associated with the payment support service itself of the present embodiment, for example. For example, the global ID is recorded in the payment support server, in association with a local ID which is associated with a respective payment server, and in the case of using the global ID, the global ID is replaced by the local ID at the payment support server at the time of execution of a payment process.

Furthermore, in the present embodiment, the user identification information and the payment server identification information are described to be separate pieces of information, but the payment server identification information may be included or embedded in the user identification information. For example, in the case where the payment server identification information is included or embedded in the user identification information, the payment method determination unit 341 of the POS register 3 in Figure 2 determines at least one of one payment method among a plurality of payment methods and a payment server corresponding to the one payment method, based on the user identification information which is transmitted from the mobile terminal and in which the payment server identification information is included or embedded. Furthermore, in the case where the payment server identification information is included or embedded in the user identification information, the payment server specification unit 541 of the payment support server 5 in Figure 3 specifies one payment server among a plurality of payment servers based on the user identification information in which the payment server identification information is included or embedded.

Moreover, the steps shown in Figures 4 and 5 do not necessarily have to be performed in the order shown in the drawings. For example, step S33 in Figure 4, that is, the step of inputting a payment amount at the POS register 3, may be performed after step S35 in the drawing of determining the payment method.

### (Second Embodiment)

In the first embodiment, a description is given of an example where a register terminal identifies a payment server and performs a payment process based on payment code information read (i.e., decoded) from a two-dimensional code and a payment method selected based on an input by a store clerk, a user or the like. In a second embodiment, a description is given of an example where, instead of where a store clerk or the like selects a payment method, a register terminal analyzes an image including a two-dimensional code captured by the image capturing device 4, determines a payment method, and performs a payment process based on the determined payment method and payment code information read from the two-dimensional code.

As with the payment support system of the first embodiment, a payment support system of the second embodiment executes a payment process and a transmission/reception process for a result of the payment process. The POS register of the first embodiment includes the code reading unit for reading a two-dimensional code which is displayed on the display unit of the mobile terminal. On the other hand, a POS register of the second embodiment further includes, in addition to the code reading unit, an image recognition processing unit for performing a recognition process of an image including a two-dimensional code, and a payment method specification unit for specifying a payment method based on the recognized image. Specifically, the POS register of the second embodiment is configured to read a two-dimensional code by the image capturing device 4 and to acquire payment code information, and to analyze an image including the two-dimensional code captured by the image capturing device 4 and to identify a payment method. In the following, redundant description of the same aspects as those in the first embodiment may be omitted.

### (Configuration of POS Register)

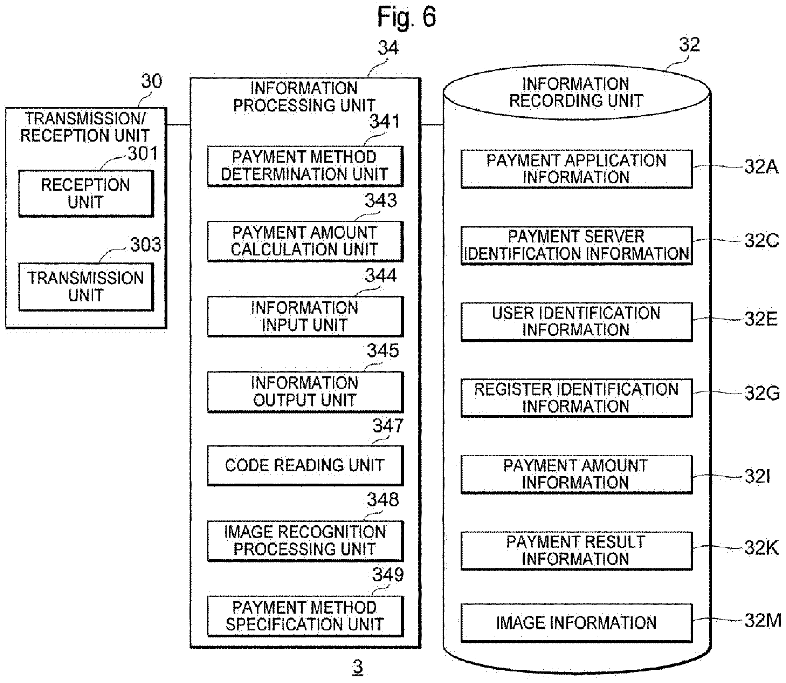

Figure 6 is a block diagram showing another embodiment of the POS register according to the embodiment of the present disclosure. As shown in Figure 6, the POS register 3, which is an example of a register, includes a transmission/reception unit 30, an information recording unit 32, and an information processing unit 34, for example.

A code reading unit 347 provided in the information processing unit 34 is compatible with the image capturing device 4, shown in Figure 1, configured of a camera or the like, and reads a code C which includes payment code information and which is displayed on the display unit D of the mobile terminal 1. For example, the image capturing device 4 includes a code reader.

The payment code information here is information which is used by the payment server for a payment process, and is information allowing specification of payment, for example. For example, the payment code information may be information including user identification information for identifying a user for each payment method or information from which the user identification information can be derived. Furthermore, the payment code information may be one-time token information. A predetermined application installed in the mobile terminal 1 generates a code C based on the payment code information according to a predetermined logic. At this time, in the present embodiment, a code C is generated in such a manner that a predetermined image allowing identification of a payment method is included at a part of or near the image of the code C.

An image recognition processing unit 348 is a functional block for performing a recognition process of an image based on an image acquired by the image capturing device 4 shown in Figure 1. In this case, an image including the code C is analyzed, and a predetermined image allowing identification of a payment method is recognized. For example, the image recognition processing unit 348 records in the information recording unit 32, for each payment method, a payment method and image information 32M allowing identification of the payment method in association with each other, and performs, based on the information, a process of recognizing a predetermined image allowing identification of a payment method in an image including the code C. Furthermore, generally, a display position of an image indicating a payment method relative to the code C and the image to be displayed are set for each payment method. Accordingly, the image information 32M for each payment method may be recorded in the information recording unit 32 in association with information about the display position relative to the code C, and the recognition process for a predetermined image allowing identification of a payment method may be performed based on these pieces of information.

A payment method specification unit 349 is a functional block for specifying a payment method based on an image recognized by the image recognition processing unit 348. The payment method specification unit 349 specifies a payment server corresponding to the payment method by referring to the payment server identification information 32C corresponding to the specified payment method.

### (Operation of Payment Process and Transmission/Reception Operation for Result of Payment Process)

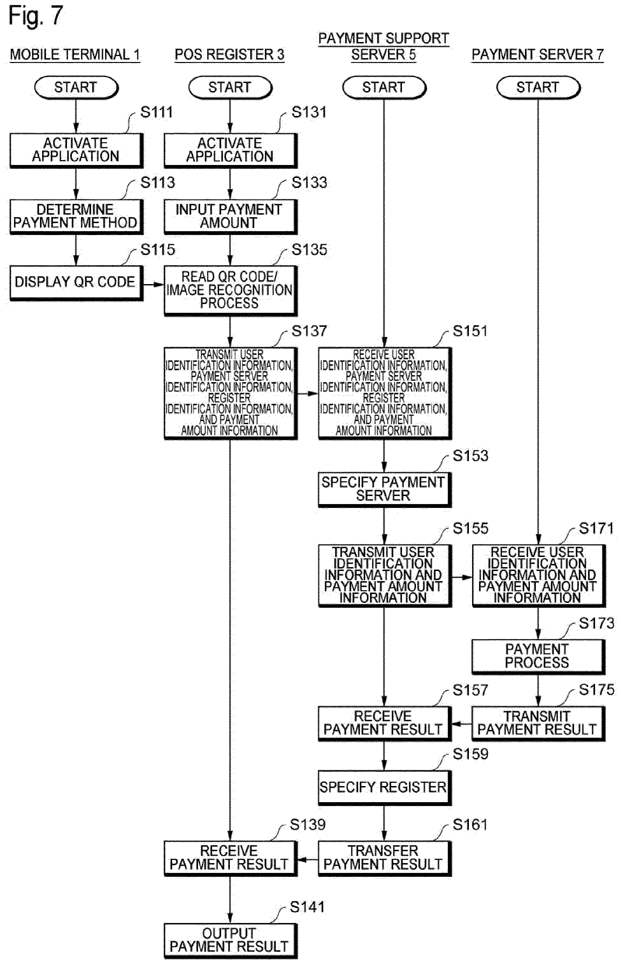

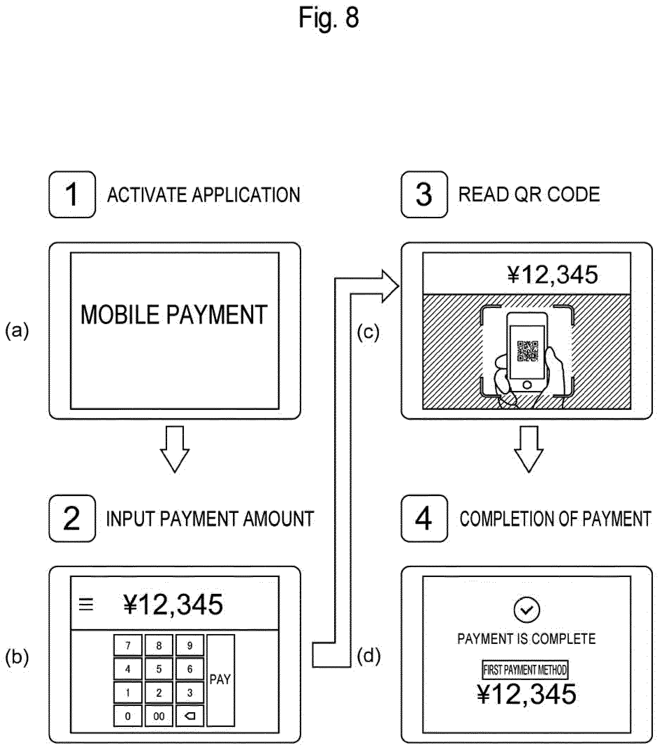

An operation of a payment process according to the second embodiment of the present disclosure will be described with reference to Figures 7 and 8. Figures 7 and 8 are flowcharts showing another example flow of a payment process according to the embodiment of the present disclosure. It is assumed that payment processing application software according to the present embodiment is downloaded in advance by a user from a predetermined site on a network, for example, and is saved so that the software can be executed by the mobile terminal 1. Furthermore, the payment processing application software according to the present embodiment is downloaded in advance by the POS register 3 or a manager of a store where the POS register 3 is provided, from a predetermined site on a network, for example, and is saved so that the software can be executed by the POS register 3. Additionally, a payment processing application downloaded in the mobile terminal 1 and a payment processing application downloaded in the POS register 3 may be different applications or the same application, as long as at least a payment process and a transmission/reception operation for a result of the payment process may be executed by the payment support system as a whole.

### (Step S111)

As shown in Figure 7, first, the mobile terminal 1 activates downloaded payment processing application software. In the case where a membership number or a password is input by a user to the activated application software, the mobile terminal 1 executes a login process.

### (Step S113)

The mobile terminal 1 displays a list of images (not shown) indicating a plurality of payment services (payment methods) on the display unit, for example. Then, in the case where one payment method among the plurality of payment methods is selected on the display device by the user carrying the mobile terminal 1, the mobile terminal 1 determines, based on an input signal according to the selection by the user, that the payment method selected by the user is the payment method which is to be currently used.

### (Step S115)

The mobile terminal 1 displays a two-dimensional code including an image allowing identification of a payment server corresponding to the selected payment method. For example, the mobile terminal 1 is configured to generate and display a different two-dimensional code every time a payment method is selected at the mobile terminal 1.

Additionally, an example is described above where one payment method is selected from a plurality of payment methods at the mobile terminal 1 by a user, but such a case is not restrictive, and payment processing application software to be executed by the mobile terminal 1 may be application software corresponding to a specific payment method. In this case, a two-dimensional code based on the specific payment method is generated without selection of a payment method by the user of the mobile terminal 1.

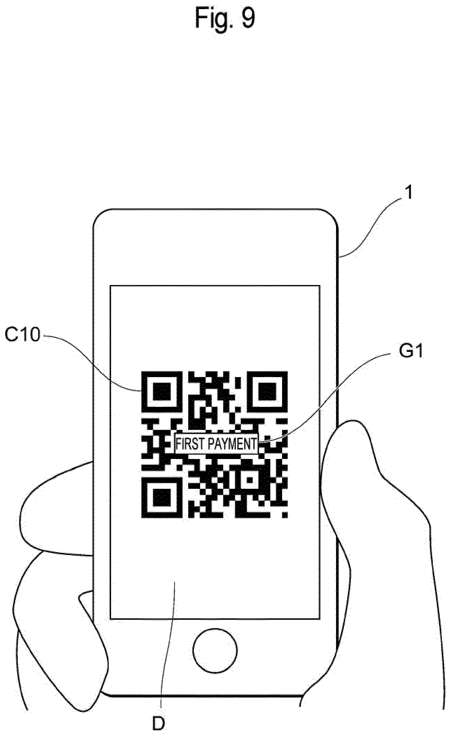

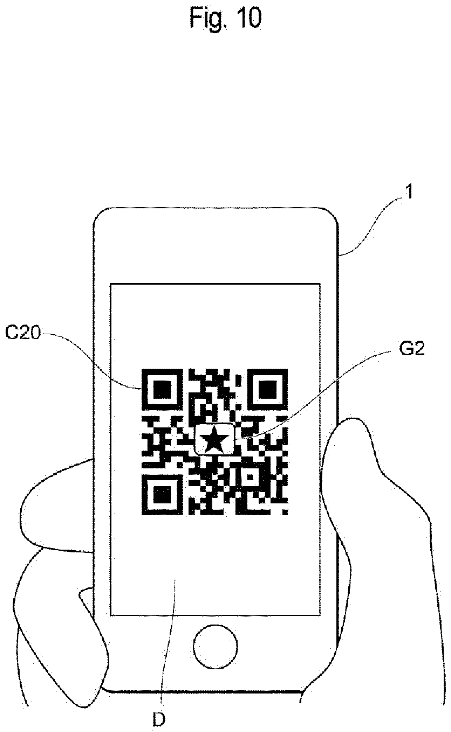

Figures 9 and 10 are diagrams showing example screens that are displayed on the display unit of the mobile terminal according to the embodiment of the present disclosure. For example, in the case where, in step S113, a user carrying the mobile terminal 1 selects "first payment method" on the display unit, a two-dimensional code C10 including an image G1 allowing identification of "first payment method" is displayed on the display unit D of the mobile terminal 1, as shown in Figure 9. In the same manner, in the case where, in step S113, a user carrying the mobile terminal 1 selects "second payment method" on the display unit, a two-dimensional code C20 including an image G2 allowing identification of "second payment method" is displayed on the display unit D of the mobile terminal 1, as shown in Figure 10. Additionally, an image G allowing identification of a payment method may include, in addition to the name or a figure corresponding to a payment method, a symbol or the like indicating the payment method.

### (Step S131, and Figure 8(a))

Referring back to Figures 7 and 8, the POS register 3 activates downloaded payment processing application software. For example, in the case where a membership number or a password is input by a store clerk to the activated application software, the POS register 3 executes a login process. Normally, download of payment processing application software and a login process are completed when a payment system is introduced in a store, but download of payment processing application software and a login process may alternatively be performed at arbitrary timings.

### (Step S133, and Figure 8(b))

At the POS register 3, a payment amount is input by an information input unit 344. For example, the store clerk calculates and inputs, to the POS register 3, as the payment amount, the price of a product or a service purchased by the user. Alternatively, input of the payment amount may be performed by the user himself/herself.

### (Step S137, and Figure 8(c))

The code reading unit 347 of the POS register 3 reads a two-dimensional code for payment presented by the user. For example, the store clerk may operate the image capturing device 4 (code reading unit 347) and read the code C displayed on the mobile terminal 1 of the user, or the user may hold the mobile terminal 1 above the image capturing device 4 so that the code C is read. The information processing unit 34 acquires payment code information based on the two-dimensional code read by the code reading unit 347.

In parallel or before or after the acquisition process for the payment code information, the image recognition processing unit 348 analyzes the image including the two-dimensional code captured by the image capturing device 4, and recognizes an image allowing identification of the payment method. Then, the payment method specification unit 349 specifies the payment method based on the image recognized by the image recognition processing unit 348, and generates payment method identification information for identifying the specified payment method. Additionally, instead of specification of the payment method by the image recognition processing unit 348 and the payment method specification unit 349 from an image captured by the image capturing device 4, the information input unit 344 may receive an input signal for selecting the payment method, as in the first embodiment, and the payment method identification information may be generated according to the payment method selected based on the input signal. For example, in the case where the payment method specification unit 349 fails to specify the payment method, the POS register 3 may output a screen for allowing selection of a payment method, and the payment method may be specified based on an input received from a user or a store clerk via the screen.

### (Step S137)

Then, the POS register 3 transmits, to the payment support server 5, payment request information including the payment code information, the payment method identification information, register identification information for identifying the POS register 3 or a store where the POS register 3 is installed, and the payment amount information. At this time, the payment request information may be generated based on the payment method specified by the payment method specification unit 349, or instead, the payment request information may be generated based on the payment method received by the information input unit 344.

### (Step S151)

Next, the payment support server 5 receives, from the POS register 3, the payment request information including the payment code information, the payment method identification information, the register identification information, and the payment amount information.

### (Step S153)

The payment support server 5 specifies, based on the payment method identification information included in the payment request information received from the POS register 3, one payment server corresponding to the payment method (hereinafter referred to as "first payment method") indicated by the payment method identification information, among the payment servers 7 corresponding to respective payment methods.

### (Step S155)

The payment support server 5 transmits, to the specified one payment server 7 corresponding to the first payment method, information including the payment code information, the register identification information, and the payment amount information. Here, for example, the payment support server may be configured to transmit identification information for identifying the payment support server itself (the payment support server identification information 52E shown in Figure 3). Specifically, in the case where the payment server is in coordination with a plurality of payment support servers, the payment support server transmits the payment support server identification information of the payment support server itself to the payment server so as to clarify to which payment support server the payment server is to transmit the result of the payment process. On the other hand, in the case where the payment support servers and the payment servers are in one-to-one correspondence, if one payment support server to which the result of the payment process is to be transmitted is determined in advance, the payment support server does not have to transmit the payment support server identification information.

### (Step S171)

Next, the payment server 7 corresponding to the first payment method receives, from the payment support server 5, the information including the payment code information, the register identification information, and the payment amount information. The payment server 7 may also receive the payment support server identification information.

### (Step S173)

The payment server 7 corresponding to the first payment method performs the payment process. For example, the payment server 7 identifies a user based on the received payment code information, and executes the payment process for the user based on the received payment amount information. For example, registered personal information of the user is referred to, and the payment process is executed in a case where the payment amount is equal to or smaller than a payment limit associated with the user, and the payment process is not executed in a case where the payment amount is greater than the payment limit.

### (Step S175)

The payment server 7 corresponding to the first payment method transmits the result of the payment process to the payment support server 5. For example, the payment server 7 is configured to transmit, as the result of the payment process, the user identification information and information indicating that the payment process was executed or was not executed.

### (Step S157)

Next, the payment support server 5 receives the result of the payment process transmitted from the payment server 7 corresponding to the first payment method.

### (Step S159)

The payment support server 5 specifies the POS register 3 indicated by the register identification information which is recorded in association with the user identification information.

### (Step S161)

The payment support server 5 transfers the result of the payment process to the specified POS register 3.

### (Step S139)

Next, the POS register 3 receives the result of the payment process transmitted from the payment support server 5.

### (Step S141, and Figure 8(d))

The POS register 3 outputs the received result of the payment process.

Additionally, instead of steps S159, S161, S139, and S141, the POS register 3 may poll the payment support server 5 at a predetermined interval to check the state of payment. For example, with respect to the payment support server 5, the POS register 3 calls an application programming interface (API) for checking the state of specific payment. If "payment non-complete" is returned for the call, the API is called again after a predetermined period of time. If "payment complete" is returned, the call to the API is stopped, and a payment complete screen is output to the POS register 3.

According to the second embodiment, in a payment process based on two-dimensional code information, a payment method may be determined based on an image capturing a two-dimensional code, without a store clerk or a user selecting and inputting the payment method. Accordingly, with respect to the payment system allowing use of a plurality of payment services, reduced cost and increased convenience may be achieved for a store, and increased task efficiency and increased convenience may be achieved for a user.

Additionally, the present embodiment is for facilitating understanding of the present disclosure, and is not intended to limit interpretation of the present disclosure. The present disclosure may be changed/modified without departing from the scope of the present disclosure, and may also include equivalents thereof. Furthermore, the present disclosure may be embodied by appropriately combining, within the scope of the present disclosure, an element of the payment support system according to the first embodiment and an element of the payment support system according to the second embodiment, or by appropriately combining a process that is executed by the payment support system according to the first embodiment and a process that is executed by the payment support system according to the second embodiment.

Moreover, the steps shown in Figures 7 and 8 do not necessarily have to be performed in the order shown in the drawings. For example, step S133 in Figure 7 may be performed after step S135 in Figure 7.

A part or all of the embodiments described above may be described as the following supplementary items, but are not limited thereto.

(Note 1) A payment support system for supporting a payment process that is based on two-dimensional code information, the payment support system including a payment support server including a first reception unit for receiving, from a register, payment server identification information for identifying a payment server that performs the payment process, user identification information for identifying a user, register identification information indicating a transfer destination of a result of the payment process, and payment amount information, a recording unit for recording the user identification information and the register identification information in association with each other, a payment server specification unit for specifying one payment server among a plurality of payment servers based on the payment server identification information, and a first transmission unit for transferring the user identification information and the payment amount information to the one payment server that is specified, where the first reception unit receives the result and the user identification information transmitted from the one payment server, and the first transmission unit transfers the result to the register indicated by the register identification information that is recorded in the recording unit in association with the user identification information.

(Note 2) The payment support system according to Supplementary Item 1, where the register includes a code reading unit for reading a code including the user identification information, a second transmission unit for transmitting the payment amount information, the payment server identification information, and the user identification information that is based on the code that is read, a second reception unit for receiving the result that is transmitted from the first transmission unit, and an information output unit for displaying the result that is received.

(Note 3) The payment support system according to Supplementary Item 1 or 2, where the payment server includes a third reception unit for receiving the user identification information and the payment amount information that are transmitted from the first transmission unit, a payment processing unit for executing the payment process in a case where a payment amount is equal to or smaller than a payment limit associated with the user, and for not executing the payment process in a case where the payment amount is greater than the payment limit, based on the user identification information and the payment amount information, and a third transmission unit for transmitting, as the result, information indicating that the payment process is executed or is not executed.

(Note 4) A payment support method for supporting a payment process that is based on two-dimensional code information, the payment support method including a first reception step of receiving, from a register, payment server identification information for identifying a payment server that performs the payment process, user identification information for identifying a user, register identification information indicating a transfer destination of a result of the payment process, and payment amount information, a recording step of recording the user identification information and the register information in association with each other, a payment server specification step of specifying one payment server among a plurality of payment servers based on the payment server identification information, and a first transmission step of transferring the user identification information and the payment amount information to the one payment server that is specified, where in the first reception step, the result and the user identification information transmitted from the one payment server are received, and in the first transmission step, the result is transferred to the register indicated by the register identification information that is recorded in association with the user identification information.

(Note 5) A payment support program for supporting a payment process that is based on two-dimensional code information, the payment support program being for causing a computer to realize a first reception function for receiving, from a register, payment server identification information for identifying a payment server that performs the payment process, user identification information for identifying a user, register identification information indicating a transfer destination of a result of the payment process, and payment amount information, a recording function for recording the user identification information and the register identification information in association with each other, a payment server specification function for specifying one payment server among a plurality of payment servers based on the payment server identification information, and a first transmission function for transferring the user identification information and the payment amount information to the one payment server that is specified, where the result and the user identification information transmitted from the one payment server are received by the first reception function, and the result is transferred, by the first transmission function, to the register indicated by the register identification information that is recorded in association with the user identification information.

## Claims

1. A register device comprising:
an image capturing device for capturing a two-dimensional code;
a code reading unit for reading payment code information from the two-dimensional code captured by the image capturing device;
an image recognition processing unit for performing a recognition process of an image allowing identification of a payment method, from an image including the two-dimensional code captured by the image capturing device;
a payment method specification unit for specifying a payment method based on the image recognized by the image recognition processing unit;
a transmission unit for transmitting, to a predetermined server, payment request information including the payment code information read by the code reading unit, information about the payment method specified by the payment method specification unit, and information about a payment amount; and
an information output unit for receiving, and outputting, a result of a payment process that is based on the payment request information.

2. The register device according to claim 1, further comprising an input unit for receiving an input for selecting a payment method, wherein
the transmission unit transmits the payment request information based on the payment method received by the input unit, instead of the payment method specified by the payment method specification unit.

3. The register device according to claim 1 or 2, further comprising a recording unit for recording, in association with each other, a payment method and image information allowing identification of the payment method, wherein
the image recognition processing unit performs the recognition process of an image based on the image information recorded in the recording unit.

4. The register device according to any one of claims 1 to 3, wherein the two-dimensional code uses a two-dimensional code that is different for each payment.

5. A program for causing a computer to execute:
capturing a two-dimensional code by an image capturing device;
reading payment code information from the two-dimensional code captured by the image capturing device;
performing a recognition process of an image allowing identification of a payment method, from an image including the two-dimensional code captured by the image capturing device;
specifying a payment method based on the image recognized in the recognition process;
transmitting, to a predetermined server, payment request information including the payment code information that is read, information about the payment method that is specified, and information about a payment amount; and
receiving, and outputting, a result of a payment process that is based on the payment request information.

6. A payment support system comprising:
a register device; and
a payment support server, wherein
the register device includes
an image capturing device for capturing a two-dimensional code,
a code reading unit for reading payment code information from the two-dimensional code captured by the image capturing device,
an image recognition processing unit for performing a recognition process of an image allowing identification of a payment method, from an image including the two-dimensional code captured by the image capturing device,
a payment method specification unit for specifying a payment method based on the image recognized by the image recognition processing unit,
a first transmission unit for transmitting, to the payment support server, payment request information including the payment code information read by the code reading unit, information about the payment method specified by the payment method specification unit, and information about a payment amount, and
an information output unit for receiving from the payment support server, and outputting, a result of a payment process that is based on the payment request information, and
the payment support server includes
a reception unit for receiving the payment request information from the register device,
a second transmission unit for transmitting, to a payment server specified based on the information about the payment method included in the payment request information, information including the payment code information and the payment amount information included in the payment request information, and
a third transmission unit for transmitting, to the register terminal device, the result of the payment process received from the payment server.

7. A payment support method for supporting a payment process that is based on a two-dimensional code, the payment support method comprising:
capturing a two-dimensional code by a register device using an image capturing device;
reading, by the register device, payment code information from the two-dimensional code captured by the image capturing device;
performing, by the register device, a recognition process of an image allowing identification of a payment method, from an image including the two-dimensional code captured by the image capturing device;
specifying, by the register device, a payment method based on the image recognized in the recognition process;
transmitting, by the register device, to a payment support server, payment request information including the payment code information that is read, information about the payment method that is specified, and information about a payment amount;
receiving, by the payment support server, the payment request information from the register device;
transmitting, by the payment support server, to a payment server specified based on the information about the payment method included in the payment request information, information including the payment code information and the payment amount information included in the payment request information;
transmitting, by the payment support server, to the register terminal device, a result of the payment process received from the payment server; and
receiving, by the register device, from the payment support server, the result of the payment process that is based on the payment request information, and outputting the result by the register device.
